# EUROPEAN PATENT APPLICATION

(11) **EP 4 818 047 A1**
(43) Date of publication of application: **07.10.2026**
(21) Application number: 26164112.0
(22) Date of filing: 11.03.2026
(51) Int. Cl.: B64D 29/06, E05B 13/10, E05B 35/00, E05C 19/14

(54) **LATCH OPERATING ASSEMBLY FOR AN AIRCRAFT PROPULSION SYSTEM LATCH**

(30) Priority: 11.03.2025 US 202563770077 P
(71) Applicant: Rohr, Inc., Chula Vista, CA 91910-2098 (US)
(72) Inventor: GORMLEY, Timothy, Bonita, CA 91902 (US)
(74) Representative: Dehns

(57) **Abstract**

A tool for operating a latch assembly includes a tool body (74), a tab, a first bumper, and a second bumper. The tool body (74) extends lengthwise between a first tool end (76) and a second tool end (78). The tool body (74) further extends between a first lateral end and a second lateral end. The tool body (74) forms a tool interface extending on a pivot axis. The pivot axis extends between the first lateral end and the second lateral end. The tab projects from the tool body (74) at the first tool end (76). The first bumper projects from the tool body (74) at a location between the first tool end (76) and the second tool end (78). The second bumper projects from the tool body (74) between the tab and the first bumper. The tab, the first bumper, and the second bumper project from a common side of the tool body (74).

## Description

This application claims priority to U.S. Patent Appln. No. 63/770,077 filed March 11, 2025.

### BACKGROUND

### 1. Technical Field

This disclosure relates generally to aircraft propulsion systems and associated nacelle structures. More particularly, this disclosure relates to latch assemblies used to secure structural components of an aircraft propulsion system and to systems and methods for operating such latch assemblies.

### 2. Background Information

Aircraft propulsion systems may include structural components such as nacelle structures, thrust reversers, or inner fixed structures that are selectively opened for inspection, maintenance, or service operations. These structures are commonly secured using latch assemblies including a latch handle and a locking mechanism. In some installations, the latch assemblies are located within confined propulsion system structures where direct manual operation of the latch handle may be difficult and require substantial force. While existing systems and methods for operating these latch assemblies may be suitable for their intended purposes, there is still room in the art for improvement.

### SUMMARY

According to an aspect of the present disclosure, a tool for operating a latch assembly includes a tool body, a tab, a first bumper, and a second bumper. The tool body extends lengthwise between a first tool end and a second tool end. The tool body further extends between a first lateral end and a second lateral end. The tool body forms a tool interface extending on a pivot axis. The pivot axis extends between the first lateral end and the second lateral end. The tab projects from the tool body at the first tool end. The first bumper projects from the tool body at a location between the first tool end and the second tool end. The second bumper projects from the tool body between the tab and the first bumper. The tab, the first bumper, and the second bumper project from a common side of the tool body.

In any of the aspects or embodiments described above or herein, the tool body may include an inner side and an outer side, and the tab, the first bumper, and the second bumper may project from the inner side of the tool body.

In any of the aspects or embodiments described above or herein, the tab, the second bumper, and the first bumper may be arranged in series along the lengthwise direction of the tool body.

In any of the aspects or embodiments described above or herein, the tab may project farther from the common side of the tool body than the first bumper.

In any of the aspects or embodiments described above or herein, the tool interface may extend through the tool body along the pivot axis.

In any of the aspects or embodiments described above or herein, the pivot axis may extend substantially perpendicular to the lengthwise direction of the tool body.

In any of the aspects or embodiments described above or herein, the tool may further include an extension member coupled to the tool interface and extending along the pivot axis.

According to another aspect of the present disclosure, a latch assembly includes a latch housing, a latch handle pivotably mounted to the latch housing about a pivot axis, a lock actuator disposed within the latch handle and movable between a locked position and an unlocked position, a first tool interface fixed to the latch handle, and a second tool interface fixed to the lock actuator. The second tool interface is movable with the lock actuator relative to the latch handle.

In any of the aspects or embodiments described above or herein, the first tool interface may project from the latch handle.

In any of the aspects or embodiments described above or herein, the second tool interface may project from the latch handle.

In any of the aspects or embodiments described above or herein, the first tool interface and the second tool interface may be disposed on a common lateral side of the latch handle.

In any of the aspects or embodiments described above or herein, the second tool interface may extend through the latch handle.

According to another aspect of the present disclosure, a method of operating a latch assembly including a latch handle pivotable about a pivot axis and a lock actuator movable between a locked state and an unlocked state, includes engaging a tool with a latch operating interface of the latch assembly, rotating the tool relative to the latch assembly about the pivot axis, and through rotation of the tool and engagement between the tool and the latch assembly, moving the lock actuator from the locked state to the unlocked state and pivoting the latch handle about the pivot axis.

In any of the aspects or embodiments described above or herein, the latch operating interface may include an engagement feature formed in the latch handle, and the tool may include a tab that is inserted into the engagement feature.

In any of the aspects or embodiments described above or herein, the method may further include contacting the lock actuator with a first bumper of the tool during the rotation of the tool.

In any of the aspects or embodiments described above or herein, the method may further include contacting the latch handle with a second bumper of the tool during the rotation of the tool.

In any of the aspects or embodiments described above or herein, the tool may be rotated through an extension member coupled to the tool and extending along the pivot axis.

In any of the aspects or embodiments described above or herein, the latch operating interface may include a first tool interface fixed to the latch handle and a second tool interface fixed to the lock actuator.

In any of the aspects or embodiments described above or herein, the method may further include engaging the tool with the second tool interface to move the lock actuator from the locked state to the unlocked state.

In any of the aspects or embodiments described above or herein, the method may further include pivoting the latch handle through continued rotation of the tool.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 illustrates an aircraft including a propulsion system, in accordance with one or more embodiments of the present disclosure.
FIG. 2 illustrates a side view of a propulsion system for an aircraft, in accordance with one or more embodiments of the present disclosure.
FIG. 3 illustrates a cutaway view of a thrust reverser inner fixed structure for the propulsion system of FIG. 2, in accordance with one or more embodiments of the present disclosure.
FIG. 4 illustrates a perspective view of a latch assembly for the inner fixed structure, in accordance with one or more embodiments of the present disclosure.
FIG. 5 illustrates a side view of a portion of the latch assembly of FIG. 4, in accordance with one or more embodiments of the present disclosure.
FIG. 6 illustrates a perspective view of the inner fixed structure, in accordance with one or more embodiments of the present disclosure.
FIGS. 7-10 illustrate views of a latch operating assembly for the latch assembly, in accordance with one or more embodiments of the present disclosure.
FIG. 11 illustrates a perspective view of the inner fixed structure with the latch operating assembly of FIGS. 7-10 engaged with the latch assembly, in accordance with one or more embodiments of the present disclosure.
FIGS. 12-14 illustrate views of another latch operating assembly for the latch assembly, in accordance with one or more embodiments of the present disclosure.
FIG. 15 illustrates a view of another latch operating assembly for the latch assembly, in accordance with one or more embodiments of the present disclosure.
FIG. 16 illustrates a view of another latch operating assembly for the latch assembly, in accordance with one or more embodiments of the present disclosure.

### DETAILED DESCRIPTION

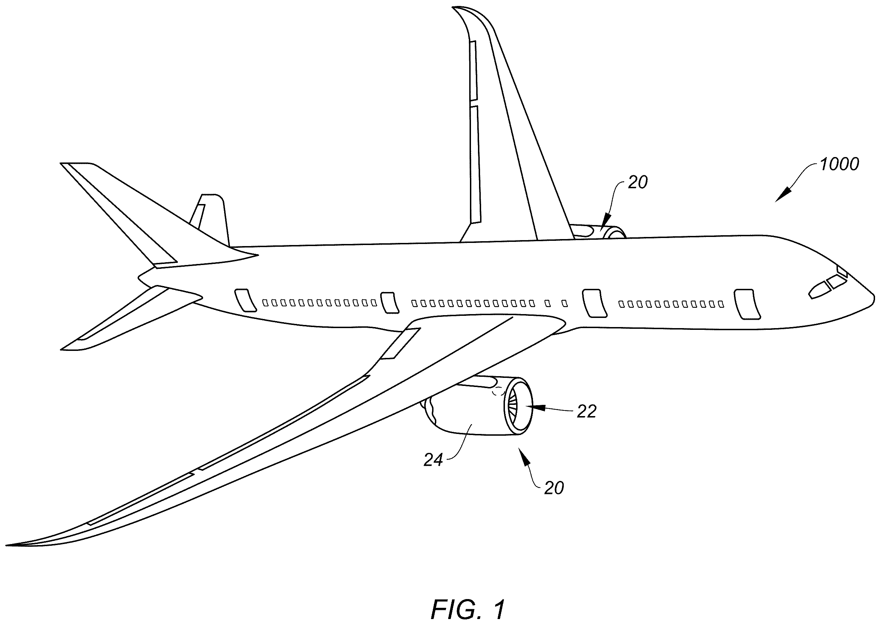

FIG. 1 illustrates an aircraft 1000 including at least one propulsion system 20. The propulsion system 20 may include, for example, a gas turbine engine 22 housed within a nacelle 24. The gas turbine engine 22 of FIG. 1 is configured as a turbofan gas turbine engine. However, aspects of the present disclosure may be equally applicable to other configurations of gas turbine engines (e.g., a turboshaft gas turbine engine, a turboprop gas turbine engine, a turbojet gas turbine engine, a propfan gas turbine engine, an open rotor gas turbine engine, etc.). Moreover, aspects of the present disclosure may also be equally applicable to aircraft propulsion systems including intermittent combustion engines (e.g., rotary engines), battery-electric propulsion assemblies, hybrid-electric propulsion assemblies, and the like.

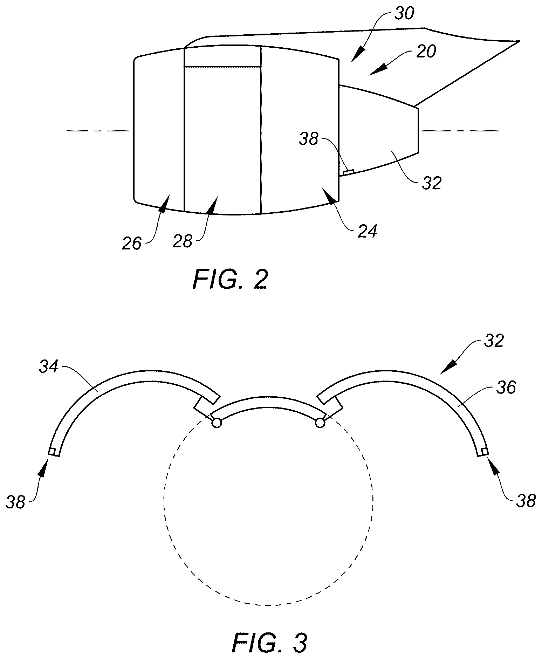

Referring to FIGS. 2-3, the nacelle 24 houses and circumscribes the gas turbine engine 22. The nacelle 24 includes a plurality of structural sections including an inlet 26, a fan cowl 28, and a thrust reverser 30. The thrust reverser 30 includes an inner fixed structure 32. The inner fixed structure 32 includes two "clam-shell" halves 34, 36 which are pivotable between an open position and a closed position. The inner fixed structure 32 further includes one or more latch assemblies 38. Each of the latch assemblies 38 is configurable in a latched condition or an unlatched condition. In the latched condition, the latch assemblies 38 are configured to securely retain the halves 34, 36 together in their respective closed positions. In the unlatched condition, the latch assemblies 38 facilitate separation and pivoting of the halves 34, 36 to their respective open positions.

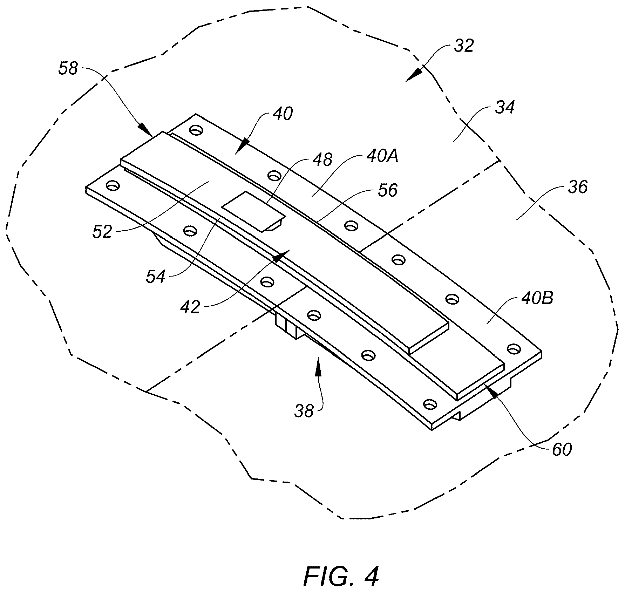

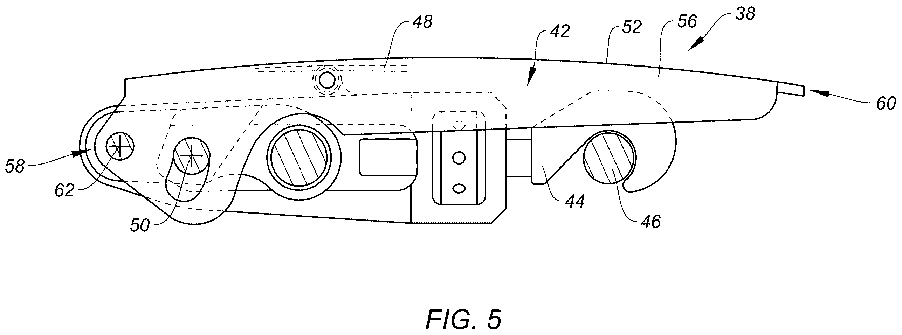

FIGS. 4-5 illustrate one of the latch assemblies 38. The latch assembly 38 of FIGS. 4-5 includes a latch housing 40, a latch handle 42, a hook 44, a latch pin 46, and a lock actuator 48. The latch housing 40 includes a first housing portion 40A mounted on the first half 34 and a second housing portion 40B mounted on the second half 36. The handle 42 is pivotably mounted to the first housing portion 40A along a pivot axis 50. The handle 42 includes an exterior side 52, a first lateral side 54, and a second lateral side 56. The exterior side 52 forms an exposed, exterior portion of the handle 42 with the latch assembly 38 in its latched condition. For example, the exterior side 52 may be disposed substantially flush with exterior surfaces of the halves 34, 36 with the latch assembly 38 in its latched condition. The first lateral side 54 and the second lateral side 56 each extend from the exterior side 52 axially spaced from one another relative to the pivot axis 50. The latch handle 42 extends lengthwise between and to a proximal end 58 of the latch handle 42 and a distal end 60 of the latch handle 42. The latch handle 42 is pivotably mounted to the first housing portion 40A at (e.g., on, adjacent, or proximate) the proximal end 58. The distal end 60 may be disposed at (e.g., on, adjacent, or proximate) the second housing portion 40B with the latch assembly 38 in its latched condition. The hook 44 is pivotably mounted to the handle 42 along a pivot axis 62. The latch pin 46 is fixedly mounted to the second housing portion 40B. The lock actuator 48 is disposed on the exterior side 52, for example, in an aperture formed through the exterior side 52. The lock actuator 48 may be configured as spring-loaded push button configured to pivot to engage the hook 44 with the latch assembly 38 in the latched condition. In the locked state of the lock actuator 48, the lock actuator 48 prevents rotation of the latch handle 42 relative to the first housing portion 40A about the pivot axis 50 to prevent inadvertent operation of the latch assembly 38 from the latched condition to the unlatched condition. The lock actuator 48 may be depressed at (e.g., on, adjacent, or proximate) the exterior side 52 to pivot the lock actuator 48 into its unlocked state allowing the latch handle 42 to be rotated relative to the first housing portion 40A about the pivot axis 50. The latch handle 42 may be rotated about the pivot axis 50 (e.g., in the counterclockwise direction for the illustration of FIG. 5) to disengage the hook 44 from the latch pin 46, thereby configuring the latch assembly 38 in the unlatched condition. Similarly, the latch handle 42 may be rotated about the pivot axis 50 (e.g., in the clockwise direction for the illustration of FIG. 5) to engage the hook 44 with the latch pin 46, thereby configuring the latch assembly 38 in the latched condition.

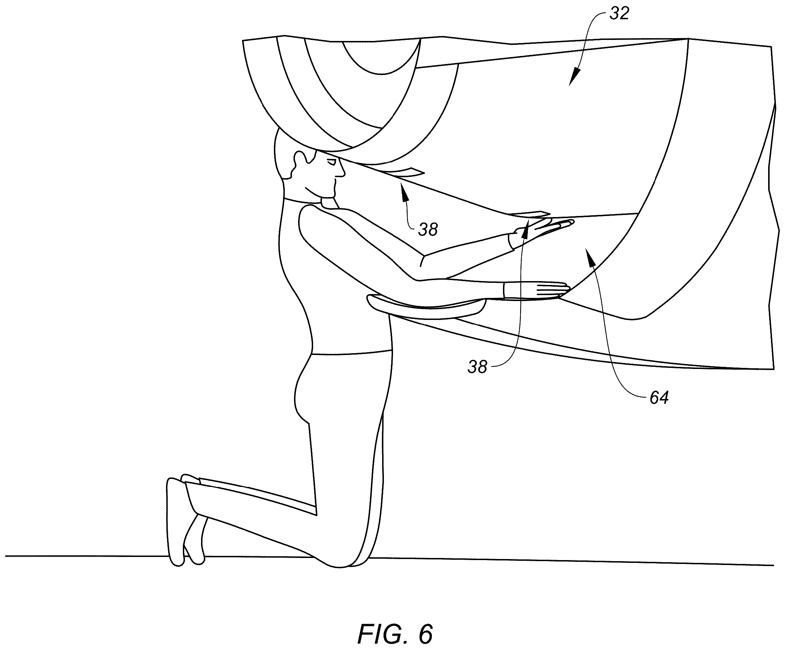

Referring to FIG. 6, the location of the latch assemblies 38 relative to the nacelle 24 may present some difficulties for latching and unlatching operations by a technician or other operator. For example, the latch assemblies 38 may be located on the inner fixed structure 32 within an exhaust duct 64 (e.g., an O-duct) of the propulsion system 20. Accordingly, an operator attempting to latch or unlatch the latch assemblies 38 may need to lean into the exhaust duct 64 in a manner that is inconvenient and potentially risks physical injury. Further complicating this operation is that the latch assemblies typically used for a propulsion system inner fixed structure, such as the inner fixed structure 32, may require a large amount of force to operate, which force may be difficult to attain in a leaning position and with limited clearance available at the latch assemblies.

In various embodiments, the latch operating assembly 66 facilitates remote actuation of the latch assembly 38 through engagement between a tool and one or more engagement features provided on the latch handle 42 and/or the lock actuator 48. The latch operating assembly 66 may enable a technician or other operator to apply torque to the latch handle 42 and, where necessary, simultaneously actuate the lock actuator 48 while positioned at a location spaced from the latch assembly 38. Such remote operation may improve operator ergonomics, reduce the risk of injury when operating latch assemblies located within confined propulsion system structures, and allow application of greater torque to the latch handle 42 than may be readily achievable through direct manual operation of the latch handle.

In some embodiments, the latch operating assembly 66 may enable simultaneous or sequential interaction with both the latch handle 42 and the lock actuator 48 using a single tool. For example, the tool may first depress or otherwise actuate the lock actuator 48 to release engagement between the lock actuator 48 and the hook 44 and may then apply a torque to the latch handle 42 to pivot the latch handle 42 about the pivot axis 50. In other embodiments, these operations may occur substantially concurrently.

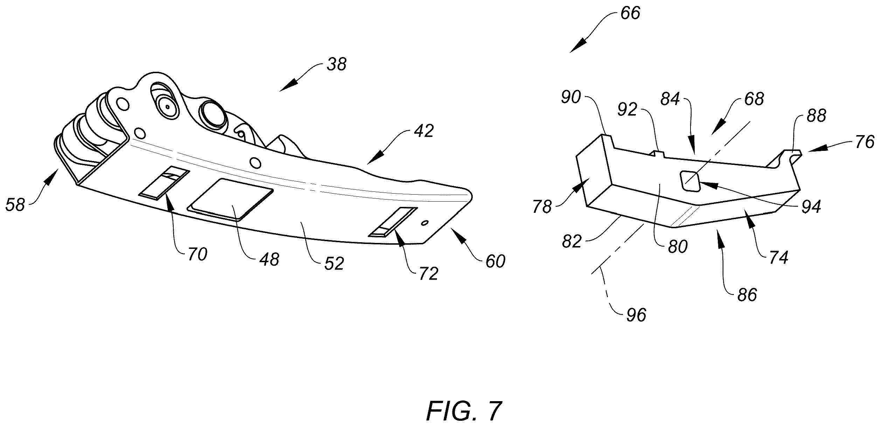

FIGS. 7-10 illustrate a first embodiment of a latch operating assembly 66. The latch operating assembly 66 is configured for use with the latch assemblies 38 and is described herein with respect to the latch assemblies 38. However, the latch operating assembly 66 of the present disclosure is not limited to latch assemblies for a thrust reverser inner fixed structure, such as the latch assemblies 38. The latch operating assembly 66 of FIGS. 7-10 includes the latch handle 42 and a latch lock and unlock tool 68. The latch handle 42 of FIGS. 7-10 forms a latch slot 70 and an unlatch slot 72 of the latch operating assembly 66. The latch slot 70 is disposed between the lock actuator 48 and the proximal end 58 (e.g., in the lengthwise direction of the latch handle 42). The unlatch slot 72 is disposed between the lock actuator 48 and the distal end 60 (e.g., in the lengthwise direction of the latch handle 42). The latch lock and unlock tool 68 includes a tool body 74. The tool body 74 extends (e.g., lengthwise) between and to a first tool end 76 of the tool body 74 and a second tool end 78 of the tool body 74. The tool body 74 extends (e.g., widthwise) between and to a first lateral end 80 of the tool body 74 and a second lateral end 82 of the tool body 74. The tool body 74 extends between and to an inner side 84 of the tool body 74 and an outer side 86 of the tool body 74. The tool body 74 forms a tab 88, a first bumper 90, and a second bumper 92 on the inner side 84. The tab 88 is disposed at (e.g., on, adjacent, or proximate) the first tool end 76. The first bumper 90 is disposed at (e.g., on, adjacent, or proximate) the second tool end 78. The second bumper 92 is disposed between the tab 88 and the first bumper 90. The tool body 74 forms a tool interface 94 on the first lateral end 80 and the second lateral end 82. The tool interface 94 extends on and along a pivot axis 96 of the latch lock and unlock tool 68. The tool interface 94 is configured to engage a tool 98 (e.g., a hand tool such as a ratchet). For example, the tool interface 94 may be a drive socket such as, but not limited to, the square drive socket shown in FIGS. 7-10. Of course, the tool interface 94 may alternatively be configured as a drive head, projecting outward at the first lateral end 80 and the second lateral end 82.

While the embodiment of FIGS. 7-10 illustrates the latch handle 42 forming the latch slot 70 and the unlatch slot 72, the present disclosure is not limited to slots. In various embodiments, the latch handle 42 may include one or more engagement features configured to receive a portion of the latch lock and unlock tool 68. Such engagement features may include, but are not limited to, a slot, recess, notch, groove, pocket, aperture, channel, keyway, or other structure configured to receive or capture a portion of the tool body 74. In addition, the engagement features of the latch handle 42 may be configured with a variety of geometries and orientations. For example, the latch slot 70 and the unlatch slot 72 may extend partially through the latch handle 42 or fully through the latch handle 42. In some embodiments, the engagement features may be formed as blind recesses or cavities within the latch handle 42.

The tab 88, the first bumper 90, and the second bumper 92 represent exemplary contact structures configured to interact with the latch handle 42 and the lock actuator 48. However, the present disclosure is not limited to these specific structures. In other embodiments, the tool body 74 may include one or more contact surfaces, protrusions, ramps, cams, or engagement members configured to interact with the latch handle 42 and/or the lock actuator 48. These structures may translate rotational movement of the latch lock and unlock tool 68 into linear, rotational, or combined motion of the latch handle 42 and/or the lock actuator 48. For example, a cam surface formed on the tool body 74 may engage the lock actuator 48 such that rotation of the latch lock and unlock tool 68 causes the cam surface to depress the lock actuator 48. Similarly, the tool body 74 may include surfaces configured to push, pull, or otherwise apply force to the latch handle 42 to rotate the latch handle 42 about the pivot axis 50.

The tool interface 94 may be configured in a variety of forms suitable for engagement with a torque-applying device. While the embodiment illustrated in FIGS. 7-10 shows a square drive socket, the tool interface 94 may alternatively be configured as a hexagonal socket, spline socket, Torx interface, drive head, or other mechanical interface suitable for engagement with a ratchet, wrench, torque tool, powered driver, or other tool. In various embodiments, the latch lock and unlock tool 68 may be removably coupled to the tool 98 through the shaft extension 100 or another extension member. The extension member may be rigid or flexible and may permit operation of the latch assembly 38 from a location spaced from the latch assembly 38 along the pivot axis 96 or along another direction relative to the propulsion system 20.

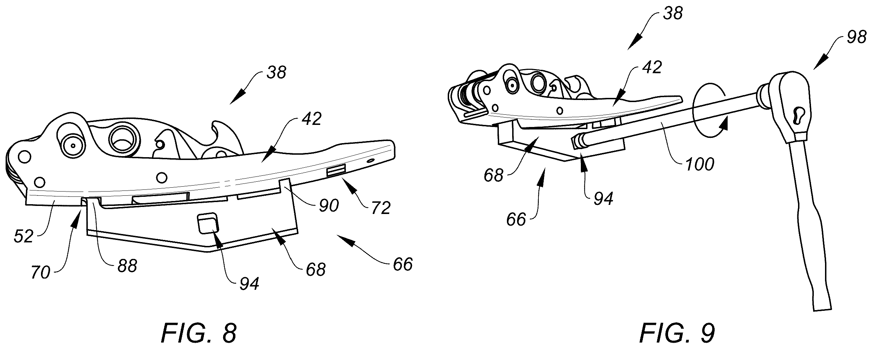

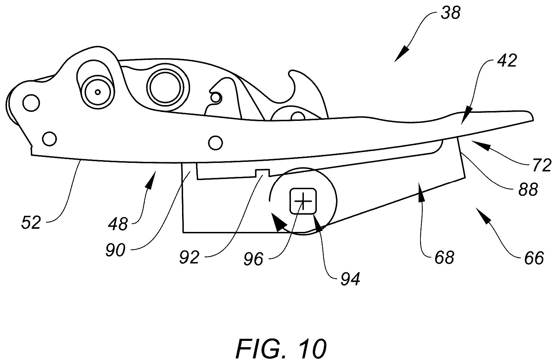

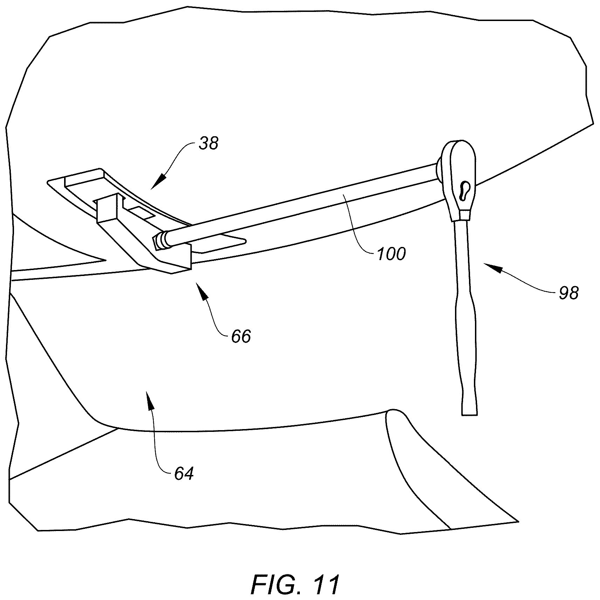

To place the latch assembly 38 in the latched condition using the latch lock and unlock tool 68, the tab 88 is inserted into the latch slot 70 to engage the latch lock and unlock tool 68 with the latch handle 42 as shown, for example, in FIGS. 8-9. The latch lock and unlock tool 68 may be engaged with the latch handle 42 while interconnected with the tool 98 for example, by a shaft extension 100. The shaft extension 100 may extend along the pivot axis 96 between the latch lock and unlock tool 68 and the tool 98. The latch lock and unlock tool 68 is rotated (e.g., in the counterclockwise direction for the illustration of FIG. 9) to push the first bumper 90 into the latch handle 42 between the lock actuator 48 and the distal end 60, thereby pivoting the latch handle 42 into the latched condition of the latch assembly 38 with the lock actuator 48 engaged with the hook 44. To place the latch assembly 38 in the unlatched condition using the latch lock and unlock tool 68, the tab 88 is inserted into the unlatch slot 72 to engage the latch lock and unlock tool 68 with the latch handle 42 as shown, for example, in FIG. 10. The latch lock and unlock tool 68 may be engaged with the latch handle 42 while interconnected with the tool 98 for example, by the shaft extension 100. The shaft extension 100 may extend along the pivot axis 96 between the latch lock and unlock tool 68 and the tool 98. The latch lock and unlock tool 68 is rotated (e.g., in the clockwise direction for the illustration of FIG. 10) to push the first bumper 90 into the lock actuator 48, thereby depressing the lock actuator 48 to disengage the lock actuator 48 from the hook 44. In this engaged condition of the first bumper 90 and the lock actuator 48, the second bumper 92 may contact the latch handle 42 between the lock actuator 48 and the unlatch slot 72. The latch lock and unlock tool 68 is further rotated (e.g., in the clockwise direction for the illustration of FIG. 10) to pivot the latch handle 42 into the unlatched condition of the latch assembly 38. As shown in FIG. 11, the latch operating assembly 66 facilitates latching and unlatching operations of the latch assemblies 38, by an operator, while allowing the operator to remain axially displaced from the latch assemblies 38 relative to the pivot axis 96 (see FIGS. 7 and 10; e.g., with the operator outside of the exhaust duct 64).

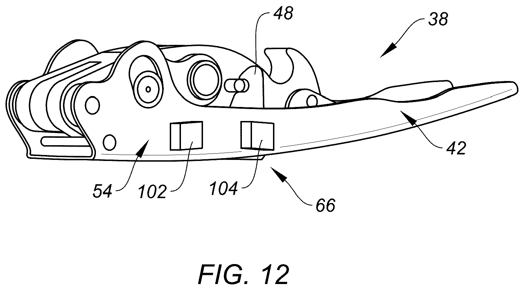

While the first tool interface 102 and the second tool interface 104 are illustrated as square drive heads in FIGS. 12-14, the present disclosure is not limited to this configuration. The first tool interface 102 and the second tool interface 104 may alternatively include sockets, hexagonal interfaces, spline interfaces, or other drive features configured to engage a corresponding tool. In some embodiments, the first tool interface 102 and the second tool interface 104 may be formed integrally with the latch handle 42 and the lock actuator 48, respectively. In other embodiments, these tool interfaces may be separate components coupled to the latch handle 42 and/or the lock actuator 48.

FIGS. 12-14 illustrate a second embodiment of the latch operating assembly 66. The latch operating assembly 66 of FIGS. 12-14 includes the latch handle 42 and the lock actuator 48. The latch handle 42 forms a first tool interface 102 on the first lateral side 54. The first tool interface 102 may alternatively be disposed on the second lateral side 56. The first tool interface 102 is fixed relative to the latch handle 42. For example, the first tool interface 102 may be an integral portion of the latch handle 42. The first tool interface 102 of FIGS. 12-14 is a drive head (e.g., a square drive head) projecting outward from the first lateral side 54. The lock actuator 48 forms a second tool interface 104 on the first lateral side 54. The second tool interface 104 may alternatively be disposed on the second lateral side 56 with the first tool interface 102. The second tool interface 104 is fixed relative to the lock actuator 48 but pivotable relative to the latch handle 42. For example, the second tool interface 104 may be an integral portion of the lock actuator 48 which extends through the latch handle 42 to the first lateral side 54. The second tool interface 104 of FIGS. 12-14 is a drive head (e.g., a square drive head) projecting outward from the first lateral side 54. The presence of the tool interfaces 102, 104 on the first lateral side 54 (or the second lateral side 56) may require a greater spacing between the latch handle 42 and the latch housing 40 (e.g., compared to at least some other embodiments herein).

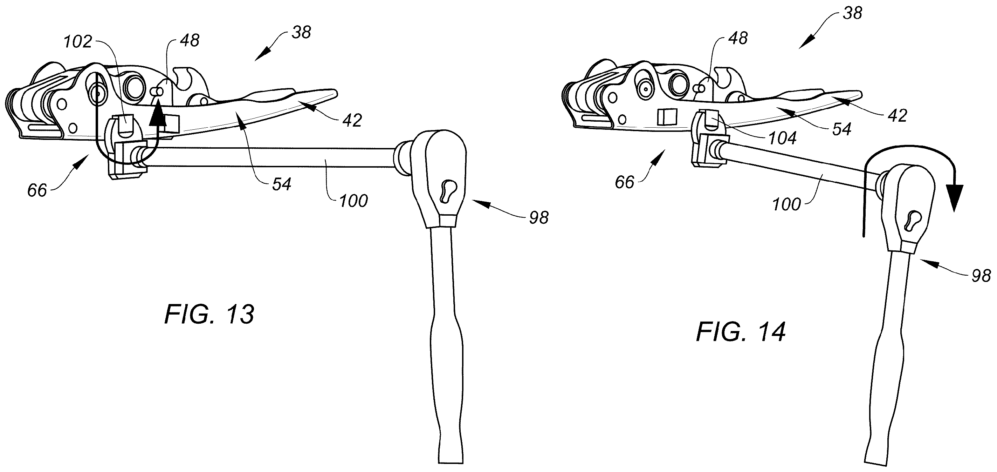

To place the latch assembly 38 in the latched condition using the latch operating assembly 66 of FIGS. 12-14, the tool 98 may be engaged with the first tool interface 102, for example, using the shaft extension 100. The latch handle 42 may be pivoted through engagement between the tool 98 with the first tool interface 102 (e.g., in the counterclockwise direction for the illustration of FIG. 13), to pivot the latch handle 42 into the latched condition of the latch assembly 38 with the lock actuator 48 engaged with the hook 44. To place the latch assembly 38 in the unlatched condition using the latch operating assembly 66 of FIGS. 12-14, the tool 98 may be engaged with the second tool interface 104, for example, using the shaft extension 100. The second tool interface 104 may be pivoted through engagement between the tool 98 with the second tool interface 104 (e.g., in the clockwise direction for the illustration of FIG. 14), to pivot the lock actuator 48 to disengage the lock actuator 48 from the hook 44. The second tool interface 104 is further rotated (e.g., in the clockwise direction for the illustration of FIG. 14) to pivot the latch handle 42 into the unlatched condition of the latch assembly 38.

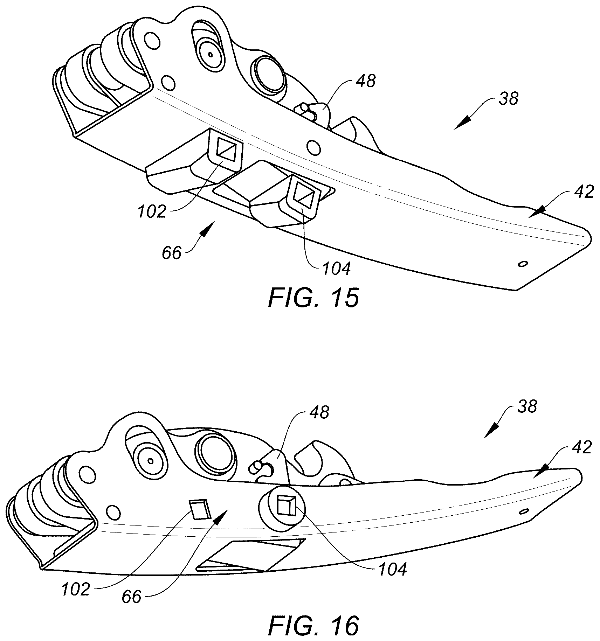

FIGS. 15 and 16 illustrate third and fourth embodiments of the latch operating assembly 66, respectively. The embodiments of the latch operating assembly 66 of FIGS. 15 and 16 may operate similar to the latch operating assembly 66 of FIGS. 12-14 with respect to the latching and unlatching operations of the latch assembly 38. The latch operating assembly 66 of FIG. 15 includes the first tool interface 102 and the second tool interface 104 at (e.g., on, adjacent, or proximate) the exterior side 52. The latch operating assembly 66 of FIG. 16 includes the first tool interface 102 and the second tool interface 104 configured as drive sockets, in contrast to the drive head configurations of the first tool interface 102 and the second tool interface 104 of FIGS. 12-14.

The various engagement features, tool interfaces, and tool structures described herein may be used individually or in combination with one another. For example, a latch handle 42 including the latch slot 70 and the unlatch slot 72 may additionally include a tool interface such as the first tool interface 102. Similarly, a latch assembly including the tool interfaces 102, 104 may additionally include engagement slots configured to receive a tool similar to the latch lock and unlock tool 68. Accordingly, the embodiments illustrated in FIGS. 7-16 are intended to be exemplary and not limiting. Features described with respect to one embodiment may be incorporated into other embodiments of the latch operating assembly 66 without departing from the scope of the present disclosure.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described herein.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A tool for operating a latch assembly, the tool comprising:
a tool body (74) extending lengthwise between a first tool end (76) and a second tool end (78), the tool body (74) further extending between a first lateral end and a second lateral end, the tool body (74) forming a tool interface extending on a pivot axis, the pivot axis extending between the first lateral end and the second lateral end;
a tab projecting from the tool body (74) at the first tool end (76);
a first bumper projecting from the tool body (74) at a location between the first tool end (76) and the second tool end (78); and
a second bumper projecting from the tool body (74) between the tab and the first bumper,
the tab, the first bumper, and the second bumper projecting from a common side of the tool body (74).

2. The tool of claim 1, wherein the tool body (74) includes an inner side and an outer side, the tab, the first bumper, and the second bumper projecting from the inner side of the tool body (74).

3. The tool of claim 1 or 2, wherein the tab, the second bumper, and the first bumper are arranged in series along the lengthwise direction of the tool body (74).

4. The tool of any preceding claim, wherein the tab projects farther from the common side of the tool body (74) than the first bumper.

5. The tool of any preceding claim, wherein the tool interface extends through the tool body (74) along the pivot axis, and/or wherein the pivot axis extends substantially perpendicular to the lengthwise direction of the tool body (74).

6. The tool of any preceding claim, further comprising an extension member coupled to the tool interface and extending along the pivot axis.

7. A latch assembly (38) comprising:
a latch housing (40);
a latch handle (42) pivotably mounted to the latch housing (40) about a pivot axis;
a lock actuator (48) disposed within the latch handle and movable between a locked position and an unlocked position;
a first tool interface (102) fixed to the latch handle; and
a second tool interface (104) fixed to the lock actuator (48), the second tool interface (104) movable with the lock actuator relative to the latch handle.

8. The latch assembly of claim 7, wherein the first tool interface (102) projects from the latch handle (42), or wherein the second tool interface (104) projects from the latch handle (42).

9. The latch assembly of claim 7 or 8, wherein the first tool interface (102) and the second tool interface (104) are disposed on a common lateral side of the latch handle (42).

10. The latch assembly of claim 7, 8, or 9, wherein the second tool interface (104) extends through the latch handle (42).

11. A method of operating a latch assembly including a latch handle (48) pivotable about a pivot axis and a lock actuator (48) movable between a locked state and an unlocked state, the method comprising:
engaging a tool with a latch operating interface of the latch assembly (38);
rotating the tool relative to the latch assembly about the pivot axis; and
through rotation of the tool and engagement between the tool and the latch assembly (38), moving the lock actuator (48) from the locked state to the unlocked state and pivoting the latch handle (42) about the pivot axis.

12. The method of claim 113, wherein the latch operating interface comprises an engagement feature formed in the latch handle, and the tool includes a tab that is inserted into the engagement feature.

13. The method of claim 12, further comprising contacting the lock actuator (48 with a first bumper of the tool during the rotation of the tool, and optionally further comprising contacting the latch handle (42) with a second bumper of the tool during the rotation of the tool.

14. The method of claim 12, wherein the tool is rotated through an extension member coupled to the tool and extending along the pivot axis.

15. The method of any of claims 11 to 14, wherein the latch operating interface comprises a first tool interface (102) fixed to the latch handle (42) and a second tool interface (104) fixed to the lock actuator 948), and optionally further comprising engaging the tool with the second tool interface (104) to move the lock actuator from the locked state to the unlocked state, and optionally further comprising pivoting the latch handle (42) through continued rotation of the tool.
